# EUROPÄISCHE PATENTSCHRIFT

(11) **EP 3 559 328 B1**
(45) Veröffentlichungstag und Bekanntmachung des Hinweises auf die Patenterteilung: **06.11.2024**
(21) Anmeldenummer: 17821832.7
(22) Anmeldetag: 07.12.2017
(51) Int. Cl.: D06F 39/00

(54) **ERMITTLUNG VON BEHANDLUNGSPARAMETERN ÜBER EINE GEOMETRIEINFORMATION EINER TEXTILIE**
DETERMINING TREATMENT PARAMETERS VIA GEOMETRIC INFORMATION OF A TEXTILE
DÉTERMINATION DE PARAMÈTRES DE TRAITEMENT AU MOYEN D'UNE INFORMATION GÉOMÉTRIQUE RELATIVE À UN TEXTILE

(30) Priorität: 21.12.2016 DE 102016225809
(43) Veröffentlichungstag der Anmeldung: 30.10.2019
(73) Patentinhaber: Henkel AG & Co. KGaA, 40589 Düsseldorf (DE)
(72) Erfinder: KESSLER, Arnd, 40789 Monheim am Rhein (DE); NITSCH, Christian, 40591 Düsseldorf (DE); ZÜCHNER, Lars, 40764 Langenfeld (DE); WAWER, Georg, 1040 Wien (AT); MÜLLER, Alexander, 40789 Monheim (DE); ARTH, Clemens, 8020 Graz (AT)
(86) Internationale Anmeldenummer: PCT/EP2017/081847
(87) Internationale Veröffentlichungsnummer: WO 2018/114356

(56) Entgegenhaltungen:
- EP-A1- 2 740 828
- EP-A1- 2 930 264
- CN-U- 204 959 394
- DE-A1- 102011 087 274
- DE-A1- 102013 210 996
- DE-A1- 102013 215 219
- US-A1- 2002 146 153

## Beschreibung

Die Erfindung betrifft Verfahren, mit welchem über eine Geometrieinformation repräsentativ für die räumliche Lage mehrerer Punkte einer Oberfläche einer Textilie mindestens ein Behandlungsparameter für eine Behandlung der Textilie ermittelt wird, insbesondere für eine Reinigung einer Textilie.

### Hintergrund der Erfindung

Textilien müssen bei Gebrauch regelmäßig Behandlungen unterzogen werden, beispielsweise einer Reinigungsbehandlung. Bei einer Reinigungsbehandlung sind insbesondere die Art der Reinigungsvorrichtung, das Reinigungsmittel und deren Interaktion Faktoren für eine effektive Reinigung. Während die physikalische Reinigungsvorgang von der Reinigungsvorrichtung durchgeführt wird, ist das Reinigungsmittel beispielsweise an den eigentlichen chemischen und biologischen Prozessen zur Vernichtung von Bakterien, Pilzen und Viren sowie zur Entfernung von beständigen Verunreinigungen beteiligt.

Der Benutzer wählt üblicherweise eine bestimmte Art der Behandlung mit entsprechenden Behandlungsparametern manuell aus, beispielsweise ein Waschprogramm auf Grundlage der Art der zu reinigenden Textilien. Insbesondere kann hierbei eine auf Etiketten an den Textilien angegebene Reinigungsinformation herangezogen werden. Ein weiterer Behandlungsparameter ist beispielsweise die Reinigungsmittelmenge, etwa die Dosierung eines Waschmittels. Die Ermittlung der zu verwendenden Reinigungsmittelmenge erfolgt zumeist anhand der Erfahrung des Benutzers und einer manuellen Schätzung der Menge und Größe der zu reinigenden Textilien und ist dementsprechend oft ungenau.

Die Auswahl der Behandlungsparameter, beispielsweise der Reinigungsmittelmenge für eine Waschmaschine oder die Einstellungen eines Trockners, ist entscheidend für die Effektivität der Behandlung der Textilien im Hinblick auf die Qualität des Behandlungsergebnisses sowie die ökologischen und ökonomischen Auswirkungen. Wird beispielsweise eine zu geringe Reinigungsmittelmenge eingesetzt, erfolgt keine vollständige Reinigung der Textilien, so dass die Reinigungsbehandlung wiederholt oder die Reinigung manuell nachgearbeitet werden muss. Ist die eingesetzte Reinigungsmittelmenge zu hoch, wird einerseits zu viel Reinigungsmittel verbraucht und damit unnötige Kosten verursacht. Andererseits werden die Umwelt und das Material der Textilie zusätzlich belastet.

Prinzipiell kann die Auswahl der Behandlungsparameter erleichtert oder sogar automatisiert werden, wenn die Textilien mit hierfür eingerichteten Markierungen versehen sind. Aus der WO 04/055256 A1 ist ein Verfahren zum Verwalten von Textilien oder Textilstücken bekannt. Die Textilstücke sind mit einem Identifikationsmittel ausgerüstet (beispielsweise einem RFID-Tag), der insbesondere einen eindeutigen Identifikationscode, Informationen zur Faserart, Färbemittel, Farbe und Waschhistorie enthalten kann.

Weiter beschreibt die EP 1 225 267 A1 eine Waschmaschine, welche einen Sensor zur Identifikation eingelegter Textilien umfasst. Die Textilien können hierbei beispielsweise über einen Chip am Etikett der Textilie erkannt werden. Die DE 298 24 311 U1 offenbart die Verwendung eines Handlesegeräts zum Erfassen von Daten eines an einer Textilie angebrachten Transponders insbesondere im Zusammenwirken mit einer Waschmaschine. Die WO 02/082363 A1 beschreibt eine Vorrichtung zum Auswerten von Barcodes oder RFID- Tags an Textilien.

Problematisch an der Verwendung spezieller Markierungen wie beispielsweise RFID-Tags an den Textilien ist jedoch, dass der Produktionsaufwand der Textilien und die Herstellungskosten deutlich erhöht werden. Daher haben sich entsprechende Systeme bisher nicht durchgesetzt. Weiter sind möglicherweise nicht alle zu behandelnden Textilien mit entsprechenden Markierungen ausgestattet oder Markierungen können von den Textilien entfernt werden, so dass nicht alle zu behandelnden Textilien von entsprechenden Systemen zuverlässig erkannt werden.

Alternativ hierzu ist es möglich, die Reinigungsmittelmenge über eine Überwachung des bei der Reinigung verwendeten Wassers zu dosieren. Hierbei wird beispielsweise die Reinigungsmittelmenge im Wasser während der Reinigung geprüft und soweit notwendig zusätzliches Reinigungsmittel hinzugegeben. Jedoch wird die Art und Menge der Textilien nicht direkt mit in die Dosierung einbezogen, so dass entsprechende Methoden ebenfalls ungenau sein können.

Dokument CN204959394 beschreibt ein Verfahren zur Anpassung der in einem Waschprozess verwendeten Wassermenge auf der Grundlage einer Bestimmung der Wäschemenge in einer Trommel. Dokument DE102011087274 beschreibt ein Verfahren zur automatischen Einstellung von Reinigungsparametern in einem Gerät auf der Grundlage von bestimmten Eigenschaften der zu reinigenden Gegenstände. Dokument EP2930264 beschreibt ein Verfahren zur Erfassung der Topographie eines Wäschestücks, um eine Position des Stücks zu bestimmen, die von einem Roboterarm erfasst werden kann. Dokument EP2740828 beschreibt ein Verfahren zur Anpassung des Reinigungsprogramms eines Geräts auf der Grundlage von Informationen, die von Abstandssensoren des Geräts geliefert werden.

Allgemeine Beschreibung einiger beispielhafter Ausführungsformen der Erfindung

Vor dem Hintergrund des dargestellten Stands der Technik ist es die Aufgabe der Erfindung, die beschriebenen Probleme zumindest teilweise zu verringern oder zu vermeiden, das heißt mindestens einen Behandlungsparameter für eine Behandlung der Textilie zuverlässig zu ermitteln und insbesondere eine optimale Reinigungsmittelmenge zu empfehlen.

Gemäß einem ersten Aspekt der Erfindung wird ein Verfahren gemäß Anspruch 1 durchgeführt. Es geht um ein Verfahren durchgeführt von einer oder mehreren Vorrichtungen, das Verfahren umfassend: Erhalten einer Geometrieinformation repräsentativ für die räumliche Lage mehrerer Punkte einer Oberfläche einer Textilie; Ermitteln anhand der räumlichen Lage der Punkte der Geometrieinformation mittels einer Interpolation zwischen den Punkten wenigstens eine Größe der Fläche der Oberfläche der Textilie, das aufgespannte Volumen der Oberfläche der Textilie, und/oder Querschnitte der Oberfläche der Textilie; Ermitteln mindestens eines Behandlungsparameters zur Behandlung der Textilie zumindest teilweise basierend auf der Geometrieinformation, wobei der mindestens eine Behandlungsparameter mindestens eine Reinigungsmittelmenge angibt; und Ausgeben oder Auslösen eines Ausgebens des mindestens einen Behandlungsparameters, wobei das Ermitteln des mindestens einen Behandlungsparameters auf der ermittelten Größe der Fläche der Oberfläche der Textilie und/oder auf einem Ermitteln des Volumens, welches von der Oberfläche der Textilie aufgespannt wird und/oder aus Querschnitten der Oberfläche der Textilie, beruht.

Die Geometrieinformation kann insbesondere eine Punktewolke repräsentativ für die räumliche Lage mehrerer Punkte einer Oberfläche einer Textilie umfassen. Beispielsweise wird die räumliche Lage der Oberfläche einer Textilie über einzelne Punkte in einem Koordinatensystem relativ zu einem bestimmten Bezugspunkt festgehalten. Die Geometrieinformation kann insbesondere Aufschluss über die räumliche Ausdehnung bzw. Gestalt der Textilie geben. Denkbar ist hierbei eine eindimensionale oder zweidimensionale Repräsentation der Punkte der Oberfläche, vorteilhafterweise wird die Oberfläche der Textilie jedoch punktweise dreidimensional repräsentiert, womit die Gestalt der Oberfläche über alle drei räumlichen Dimensionen mit der Geometrieinformation festgehalten werden kann.

Unter einer Textilie werden insbesondere Kleidungsstücke, Gardinen oder Bettzeug verstanden. Kleidungsstücke und Bettzeug umfassen beispielsweise Hemden, T-Shirts, Kleider, Jacken, Pullover, Hosen, Decken, Abdeckungen und Bezüge. Die Textilien können verschiedene Materialien umfassen, beispielsweise Naturfasern, Chemiefasern oder auch weitere Materialien wie Leder. Unter einer Textilie soll beispielsweise ein Erzeugnis verstanden werden, das zu mindestens 80 % seines Gewichtes aus textilen Rohstoffen hergestellt ist. Dabei sollen als textile Rohstoffe beispielsweise Fasern einschließlich Tierhaare verstanden werden, die sich verspinnen oder zu textilen Flächengebilden verarbeiten lassen.

Der mindestens eine Behandlungsparameter basiert zumindest teilweise auf der Geometrieinformation und kann somit einen Behandlungsparameter umfassen, welcher empfindlich auf die räumliche Ausdehnung der Textilie ist. Gemäß einer Ausgestaltung des Verfahrens gemäß dem ersten Aspekt beruht das Ermitteln des mindestens einen Behandlungsparameters auf einem Ermitteln der Fläche der Oberfläche der Textilie und/oder auf einem Ermitteln des Volumens, welches von der Oberfläche der Textilie aufgespannt wird. Weiter denkbar ist das Ermitteln des mindestens einen Behandlungsparameters beruhend auf einem oder mehreren Querschnitten der Oberfläche.

Die Oberfläche kann anhand der räumlichen Lage der Punkte der Geometrieinformation ermittelt werden. Beispielsweise wird eine Modellierung bzw. Interpolation zwischen den Punkten vorgenommen. Eine solche Interpolation kann insbesondere auf Polygonen oder Splines beruhen. Beispielsweise wird ein Polygongitter mit mindestens einem Teil der Punkte aus der Geometrieinformation als Stützpunkte ermittelt. Anhand einer entsprechenden Interpolation kann beispielsweise die Fläche der Oberfläche, das aufgespannte Volumen und Querschnitte der Textilie näherungsweise ermittelt werden.

Die Ermittlung des mindestens einen Behandlungsparameters aus der Geometrieinformation und insbesondere aus Größen wie der Fläche der Oberfläche, dem aufgespannten Volumen und/oder aus Querschnitten kann beispielsweise anhand von mathematischen Funktionen und/oder einem Vergleich mit Vergleichswerten vorgenommen werden. Entsprechende Vergleichswerte können in einer Datenbank hinterlegt sein.

In einer weiteren Ausgestaltung des Verfahrens umfasst das Verfahren weiterhin: Bestimmen eines Benutzerprofils zumindest teilweise basierend auf dem mindestens einen Behandlungsparameter, insbesondere basierend auf einer Mehrzahl von ermittelten Behandlungsparametern, wobei die Ermittlung des mindestens einen Behandlungsparameters zumindest teilweise auf dem Benutzerprofil basiert.

Über den mindestens einen Behandlungsparameter kann somit ein Benutzerprofil erstellt werden, welches an die jeweiligen Anforderungen angepasst wird. Insbesondere kann eine Mehrzahl von Behandlungsparametern im Sinne einer Historie von ermittelten Behandlungsparametern in ein Benutzerprofil einfließen, so dass zukünftige Ermittlungen zumindest teilweise auf dem Benutzerprofil basieren können.

Der mindestens eine Behandlungsparameter kann beispielsweise mindestens einen Reinigungsparameter angeben. Denkbar sind weiter Parameter einer Vorbehandlung, Konditionierungsbehandlung, Trocknung, Nachbehandlung oder Glättung. Insbesondere repräsentiert der mindestens eine Behandlungsparameter eine Reinigungsmittelmenge, eine Reinigungsmittelart, eine Reinigungstemperatur, einen Reinigungsvorrichtungstyp, Einstellungen einer Reinigungsvorrichtung oder Kombinationen hiervon.

Reinigungsmittel werden beispielsweise im Haushalt für die Reinigung unterschiedlicher Objekte eingesetzt. Beispielsweise wird für Waschmaschinen ein Reinigungsmittel, zum Beispiel ein Waschmittel, für die Reinigung von Textilien eingesetzt. Unter einem Reinigungsmittel sollen jedoch ebenfalls auch Reinigungshilfsmittel oder Reinigungszusatzmittel, wie beispielsweise ein Bleichzusatzmittel, ein Weichspüler oder Wäschestärke, verstanden werden. Ein Reinigungsmittel kann zudem eine Flüssigkeit, ein disperses System, zum Beispiel ein Gel oder Schaum, oder ein Feststoff, insbesondere ein Tab, Pulver oder Granulat, sein.

Ein Reinigungsmittel kann beispielsweise eine oder mehrere Komponenten aus der Gruppe von Komponenten umfassend Tenside, Alkalien, Builder, Vergrauungsinhibatoren, optische Aufheller, Enzyme, Bleichmittel, Soil-Release-Polymere, Füller, Weichmacher, Duftstoffe, Farbstoffe, Pflegestoffe, Säuren, Stärke, Isomalt, Zucker, Zellulose, Zellulosederivate, Carboxymethylcellulose, Polyetherimid, Silikonderivate und/oder Polymethylimine aufweisen.

Ein Reinigungsmittel kann ferner einen oder mehrere weitere Bestandteile umfassen. Diese Bestandteile schließen ein, sind aber nicht beschränkt auf die Gruppe bestehend aus Bleichaktivatoren, Komplexbildnern, Gerüststoffen, Elektrolyten, nichtwässrigen Lösungsmitteln, pH-Stellmitteln, Parfümträgern, Fluoreszenzmitteln, Hydrotropen, Silikonölen, Bentoniten, Antiredepositionsmitteln, Einlaufverhinderern, Knitterschutzmitteln, Farbübertragungsinhibitoren, antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- oder Imprägniermitteln, Quell- oder Schiebefestmitteln und/oder UV-Absorbern.

Der mindestens eine Behandlungsparameter kann die Reinigungsmittelmenge repräsentieren und insbesondere eine absolute Menge des Reinigungsmittels angeben. Ebenso kann eine relative Menge des Reinigungsmittels angegeben werden, beispielsweise ein Flottenverhältnis oder eine Reinigungsmittelmenge bezogen auf ein zur Reinigung einzusetzendes Wasservolumen.

Besonders die Reinigungsmittelmenge ist von der geometrischen Ausdehnung der Textilie abhängig, beispielsweise vom Volumen der Textilie oder der Oberfläche der Textilie. Über die Geometrieinformation kann somit die geometrische Ausdehnung der Textilie, beispielsweise das Volumen oder die Oberfläche, bei der Ermittlung des Reinigungsparameters, beispielsweise der Reinigungsmittelmenge, in Betracht gezogen werden.

Folglich kann dem Benutzer mittels des Verfahrens gemäß dem ersten Aspekt eine Empfehlung einer optimalen Behandlung gegeben werden. Beispielsweise wird die optimale Reinigungsmittelmenge zumindest teilweise anhand der Geometrieinformation, beispielsweise über eine Ermittlung des Volumens und/oder der Oberfläche der Textilie, ermittelt und ausgegeben. Die Ermittlung der Reinigungsmittelmenge muss somit nicht mehr anhand einer Schätzung erfolgen und kann insbesondere automatisiert werden. Folglich kann auf eine benutzerfreundliche Art eine möglichst vollständige Behandlung der Textilie bei einer gleichzeitigen ökonomischen und ökologischen Effektivität der Behandlung erreicht werden.

In einer Ausgestaltung des Verfahrens gemäß dem ersten Aspekt umfasst das Verfahren weiterhin das Durchführen einer Behandlung der Textilie zumindest teilweise beruhend auf dem mindestens einen Behandlungsparameter, insbesondere ein Durchführen einer Reinigungsbehandlung der Textilie. Der mindestens eine Behandlungsparameter kann an eine Behandlungsvorrichtung ausgegeben werden, wobei die Behandlungsvorrichtung den mindestens einen Behandlungsparameter als Voreinstellung übernimmt. Der Benutzer muss dann die Behandlung beispielsweise lediglich starten.

Beispielsweise kann die Behandlungsvorrichtung dafür eingerichtet sein, einen oder mehrere Behandlungsparameter automatisch in einer Behandlung zu berücksichtigen. Beispielsweise verfügt die Behandlungsvorrichtung über eine Dosiereinrichtung für ein Reinigungsmittel, wobei die über das Verfahren ermittelte optimale Reinigungsmittelmenge von der Dosiereinrichtung automatisch für die Behandlung bereitgestellt wird.

In einer weiteren Ausgestaltung des Verfahrens gemäß dem ersten Aspekt umfasst das Verfahren: Erhalten mehrerer Geometrieinformationen repräsentativ für die räumliche Lage mehrerer Punkte einer Oberfläche mehrerer Textilien; und Ermitteln mindestens eines Behandlungsparameters zur Behandlung der Textilien zumindest teilweise basierend auf den Geometrieinformationen. Üblicherweise sollen mehrere Textilien einer gemeinsamen Behandlung in einer Behandlungsvorrichtung unterzogen werden. Beispielsweise wird eine Vielzahl von Textilien gemeinsam gereinigt. Hierzu kann für jede einzelne Textilie eine Geometrieinformation erhalten und zur Ermittlung des mindestens einen Behandlungsparameters herangezogen werden. In einer besonders einfachen Ausgestaltung wird eine Summation der aus den Geometrieinformationen ermittelten Größen vorgenommen. Beispielsweise wird die Summe der Oberflächen oder Volumina der Textilien ermittelt und zur Ermittlung des mindestens einen Behandlungsparameters verwendet.

In einer weiteren Ausgestaltung des Verfahrens ist die Geometrieinformation repräsentativ für die räumliche Lage mehrerer Punkte auf mindestens einem Teilabschnitt mindestens eines Querschnittes der Oberfläche der Textilie. Beispielsweise liegen mindestens eine Gruppe der Punkte in einer Ebene, welche die Oberfläche der Textilie schneidet. Die Geometrieinformation kann somit charakteristisch für zumindest einen Teilabschnitt eines oder mehrerer Querschnitte durch die Oberfläche sein, auf dessen Grundlage der mindestens eine Behandlungsparameter ermittelt wird.

In einer Ausgestaltung des Verfahrens gemäß dem ersten Aspekt umfasst das Verfahren weiterhin: Bestimmen der Geometrieinformation repräsentativ für die räumliche Lage mehrerer Punkte der Oberfläche der Textilie.

Die Bestimmung der Geometrieinformation kann auf einem oder mehreren verschiedenen Methoden basieren. Denkbar ist eine auf Berührung basierende Methode, beispielsweise eine mechanische Abtastung der Oberfläche der Textilie. Vorteilhafterweise wird jedoch eine berührungslose Methode zur Bestimmung der Geometrieinformation herangezogen. Berührungslose Methoden können beispielsweise auf einer Reaktion der Oberfläche auf Strahlung wie Licht, Röntgenstrahlung und/oder Partikelstrahlung beruhen. Ebenfalls kann die Reaktion der Oberfläche auf Ultraschall zur Bestimmung der Geometrieinformation dienen.

Hierbei kann insbesondere bei einer Bestimmung der Geometrieinformation über Strahlung die Bestimmung passiv erfolgen, wobei eine die Reaktion der Textilie auf eine äußere Anregung untersucht wird, beispielsweise auf das Umgebungslicht. In einer weiteren Ausgestaltung des Verfahrens gemäß dem ersten Aspekt umfasst das Bestimmen der Geometrieinformation jedoch das Beaufschlagen der Oberfläche der Textilie mit einer Anregung. Hiermit kann eine definierte Anregung der Textilie und damit eine genauere Bestimmung der Geometrieinformation erfolgen.

Insbesondere umfasst die Anregung einen Laserstrahl, womit sowohl die Energie der auf die Textilie einwirkenden Strahlung als auch die Ausbreitungsrichtung der Strahlung sehr genau definiert werden können und die eingehende Strahlung im Wesentlichen kohärent ist.

In einer weiteren Ausgestaltung des Verfahrens gemäß dem ersten Aspekt wird die Anregung zeitlich moduliert. Beispielsweise kann der Anregung ein zeitlich variierender Intensitätsverlauf zugrunde liegen, womit die Bestimmung der räumlichen Lage eines oder mehrerer Punkte erleichtert werden kann. Weiter kann auch die Anregung in ihrer räumlichen Orientierung zeitlich variiert werden. Beispielsweise kann die Ausbreitungsrichtung der anregenden Strahlung gedreht und/oder der Ausgangspunkt der anregenden Strahlung versetzt werden. Insbesondere geht die Anregung von einer relativ zur Textilie bewegten Anregungsquelle aus.

In einer Ausgestaltung des Verfahrens gemäß dem ersten Aspekt umfasst das Bestimmen der Geometrieinformation eine Laufzeitmessung bzw. Time-of-Flight (TOF)-Messung. Mit einer Laufzeitmessung wird eine Längenmessung bzw. Distanzmessung über die Laufzeit eines Signals unter Berücksichtigung der Geschwindigkeit ermöglicht. Beispielsweise wird eine zeitlich variierende Anregung wie ein Laserimpuls auf die Oberfläche der Textilie gesandt und deren Reflexion oder Streuung detektiert. Über die Laufzeit kann die Distanz zu der Oberfläche und damit die Lage des von der Anregung beaufschlagten Punktes ermittelt werden. Beispielsweise werden Entfernungsmesser, insbesondere Laserentfernungsmesser beruhend auf einer Laufzeitmessung verwendet.

In einer weiteren Ausgestaltung des Verfahrens gemäß dem ersten Aspekt wird die Anregung eindimensional oder zweidimensional räumlich strukturiert. Damit trifft die Anregung nicht nur lediglich einen einzelnen, annähernd punktförmigen Abschnitt der Oberfläche, sondern trifft räumlich strukturiert über bestimmte Abschnitte auf die Oberfläche. Beispielsweise können mehrere Punkte der Oberfläche gleichzeitig mit der Anregung beaufschlagt werden. Hierbei kann insbesondere ein Speckle-Muster als Anregung auf die Oberfläche der Textilie gesandt werden. Ebenso können beispielsweise linienförmige Abschnitte der Oberfläche angeregt werden oder sonstige eindimensionale oder zweidimensionale Muster als Anregung auf die Oberfläche gebracht werden, wobei eine räumliche Variation der Intensität der Anregung vorgenommen wird.

Insbesondere wird mit einer räumlichen Strukturierung der Anregung die räumliche Lage mehrerer Punkte der Oberfläche gleichzeitig ermittelt. Damit kann die Dauer der Bestimmung der Geometrieinformation verkürzt und deren Effektivität erhöht werden.

Beispielsweise beruht die Ermittlung der Geometrieinformation auf der detektierten Veränderung bzw. Verzerrung einer spezifischen, räumlich strukturierten Anregung, beispielsweise einem eindimensionalen oder zweidimensionalen Muster durch das Auftreffen auf die Oberfläche der Textilie.

In einer weiteren Ausgestaltung des Verfahrens gemäß dem ersten Aspekt umfasst das Bestimmen der Geometrieinformation eine Triangulation. Mit einer Triangulation kann die räumliche Lage eines Punktes der Oberfläche besonders einfach und insbesondere für kurze Distanzen besonders genau ermittelt werden.

Die Triangulation kann beispielsweise anhand unterschiedlicher Positionen und/oder Ausrichtungen einer Anregungsquelle und einer Sensoreinrichtung durchgeführt werden. Ebenso können mehrere Sensoreinrichtungen, insbesondere Sensorfelder verwendet werden, wobei die einzelnen Sensoreinrichtungen verschiedene Positionen und/oder Ausrichtungen abdecken. Beispielsweise wird mindestens eine Stereokamera und/oder mindestens eine Zeilenkamera verwendet. Unter einer Stereokamera werden hierbei nicht nur stereoskopische Sensorsysteme verstanden, welche lediglich zwei Sensoreinheiten aufweisen. Vielmehr kann eine Stereokamera im Sinne dieser Beschreibung zwei oder mehr Sensoreinheiten bzw. Kameras aufweisen, welche ein stereoskopisches Sensorsystem bilden.

Durch einen Vergleich der Einzelbilder der Oberfläche von Sensoreinheiten bzw. Kameras aus unterschiedlichen Perspektiven kann die räumliche Lage von Punkten der Oberfläche ermittelt werden. Verschiedene Auswerteverfahren können eingesetzt werden, insbesondere entsprechend den Verfahren aus den Aufsätzen *"*Development of a Video-Rate Stereo Machine" von Takeo Kanade et al., Proceedings of International Robotics and Systems Conference 1995, Vol. 3, Seiten 95 - 100 und *"*Real time correlation-based stereo: algorithm, implementations and applications" von Olivier Faugeras et al., Institut National de Recherche en Informatique et en Automatique (INRIA), Rapport de Recherche, Programme 4, No. 2013, August 1993 bekannt sind.

Gemäß einer weiteren Ausgestaltung des Verfahrens gemäß dem ersten Aspekt erfolgt das Bestimmen der Geometrieinformation zeitabhängig. Beispielsweise wird die Oberfläche der Textilie über die Zeit abgetastet, um die Geometrieinformation zu erhalten. Hiermit kann einerseits eine genauere Bestimmung der Geometrieinformation erreicht werden und andererseits auch die Effektivität der Bestimmung, beispielsweise im Hinblick auf begrenzte Rechenkapazitäten, verbessert werden. Insbesondere wird das Bestimmen der Geometrieinformation zeitabhängig an einer bewegten Textilie durchgeführt, beispielsweise mit einer feststehenden Sensoreinheit. Damit kann die Geometrieinformation beispielsweise vor, während oder nach der Durchführung einer Behandlung, wenn eine Bewegung der Textilie erforderlich ist, bestimmt werden.

Beispielsweise wird die Geometrieinformation ermittelt, wenn eine Behandlungsvorrichtung mit der Textilie beladen oder entladen wird. Weiter denkbar ist die Bestimmung der Geometrieinformation während einer Behandlung, beispielsweise während einer Reinigungsbehandlung.

Insbesondere wird in einer zeitlichen Abfolge die räumliche Lage mehrerer Querschnitte der Oberfläche der Textilie aufgenommen. Eine zeitabhängige Bestimmung wird insbesondere durch mehrere, in Zeitintervallen erfolgende Bestimmungen mit einer bewegten Sensoreinrichtung und/oder bewegten Textilie durchgeführt. Dabei werden durch die Bestimmung in den unterschiedlichen Zeitintervallen die räumliche Lage mehrerer Punkte der Oberfläche, welche verschiedenen Querschnitten der Oberfläche zuzuordnen sind, aufgenommen. Die derart bestimmten Punkte einzelner Querschnitte können zu einer Repräsentation der gesamten Oberfläche zusammengeführt werden.

Gemäß einer weiteren Ausgestaltung des Verfahrens gemäß dem ersten Aspekt wird das Verfahren von zumindest einer ersten Vorrichtung, insbesondere einer beispielhaften Behandlungsvorrichtung, und einer zweiten Vorrichtung durchgeführt, wobei die Geometrieinformation repräsentativ für die räumliche Lage mehrerer Punkte einer Oberfläche einer Textilie an der ersten Vorrichtung erhalten wird und an die zweite Vorrichtung gesendet wird; wobei die Geometrieinformation repräsentativ für die räumliche Lage mehrerer Punkte einer Oberfläche einer Textilie an der zweiten Vorrichtung empfangen wird; wobei der mindestens eine Behandlungsparameter zur Behandlung der Textilie zumindest teilweise basierend auf der Geometrieinformation durch die zweite Vorrichtung ermittelt an die erste Vorrichtung gesendet wird; und wobei der mindestens eine Behandlungsparameter an der ersten Vorrichtung empfangen wird.

Die erste Vorrichtung ist dabei beispielsweise ein mobiles Gerät oder eine Behandlungsvorrichtung, wie im Folgenden noch im Detail beschrieben wird. Die zweite Vorrichtung ist insbesondere ein (entfernt liegender) Server, insbesondere ein Server, welcher eine Computer Cloud oder ein Teil hiervon ist, wie ebenfalls im Folgenden noch im Detail beschrieben wird. Insbesondere im Fall einer komplexen Geometrieinformation kann eine nicht lokale Ermittlung des Behandlungsparameters vorteilhaft sein. Eine Kommunikation zwischen der ersten Vorrichtung und der zweiten Vorrichtung kann dabei insbesondere über ein Kommunikationssystem, beispielsweise zumindest teilweise über das Internet, erfolgen.

Beispielsweise wird eine Behandlungsvorrichtung zur Behandlung von Textilien umfassend eine Sensoreinrichtung zum Bestimmen der Geometrieinformation repräsentativ für die räumliche Lage mehrerer Punkte einer Oberfläche einer Textilie beschrieben. Die Behandlungsvorrichtung ist insbesondere zur Reinigung von Textilien ausgestaltet. Unter einer Behandlungsvorrichtung wird insbesondere eine automatische Haushaltswaschmaschine oder ein Haushaltstrockner für Textilien verstanden.

Die Bestimmung der Geometrieinformation kann auf mindestens einer auf Berührung basierenden Methode und/oder mindestens einer berührungslosen Methode basieren. Beispielsweise kann die Sensoreinrichtung dafür eingerichtet sein, eine Reaktion der Oberfläche auf Strahlung wie Licht, Röntgenstrahlung und/oder Partikelstrahlung zu detektieren und hierauf basierend eine Geometrieinformation zu bestimmen. Die Geometrieinformation kann insbesondere mit der Durchführung des zuvor beschriebenen Verfahrens gemäß dem ersten Aspekt dafür verwendet werden, mindestens einen Behandlungsparameter zu ermitteln, beispielsweise die optimale Reinigungsmittelmenge für einen Reinigungsvorgang.

In einer Ausgestaltung der Behandlungsvorrichtung ist eine Anregungsquelle zur Beaufschlagung der Oberfläche der Textilie mit einer Anregung vorgesehen, womit eine definierte Anregung zur Bestimmung der Geometrieinformation durch die Sensoreinrichtung bereitgestellt wird. Als Anregungsquelle kann insbesondere mindestens eine Laserquelle vorgesehen sein bzw. die Anregungsquelle kann mindestens eine Laserquelle umfassen.

In einer weiteren Ausgestaltung der Behandlungsvorrichtung umfasst die Sensoreinrichtung mindestens eine Stereokamera und/oder mindestens eine Zeilenkamera. Unter einer Stereokamera werden hierbei nicht nur stereoskopische Sensorsysteme verstanden, welche lediglich zwei Sensoreinheiten aufweisen. Vielmehr kann eine Stereokamera im Sinne dieser Beschreibung zwei oder mehr Sensoreinheiten bzw. Kameras aufweisen, welche ein stereoskopisches Sensorsystem bilden.

Die Stereokamera bzw. die Zeilenkamera können insbesondere einen digitalen Bildsensor umfassen. Zur Ermittlung der einfallenden Strahlung kann insbesondere mindestens ein Halbleiterelement, Dioden, CCD-Elemente oder CMOS-Elemente verwendet werden. Denkbar ist die Verwendung von monochromen Sensoren ohne Farbauflösung oder von Sensoren, welche auf bestimmte Wellenlängenbereiche beschränkt sind, beispielsweise basierend auf mindestens einer Photodiode und/oder mindestens einem LED-Element. Die Sensoreinrichtung kann jedoch auch dafür eingerichtet sein, eine Farbinformation bereitzustellen.

Die Sensoreinrichtung kann weitere optische Elemente aufweisen, beispielsweise optische Filter, reflektierende Elemente bzw. Spiegel, Linsen, Blenden, Spektrometer oder dergleichen.

In einer weiteren Ausgestaltung der Behandlungsvorrichtung umfasst die Sensoreinrichtung mindestens einen Entfernungsmesser und/oder Tiefensensor. Wird eine Entfernungsmesser oder Tiefensensor an einer definierten Position mit einer definierten Ausrichtung angeordnet, kann über eine Entfernungsmessung oder Tiefenmessung die räumliche Lage mindestens einen Punktes der Oberfläche der Textilie ermittelt werden. Unter einen Tiefensensor wird insbesondere ein auf einer strukturierten Anregung basierender Sensor verstanden, beispielsweise ähnlich der Funktionsweise von Sensoreinheiten, welche unter der Bezeichnung *Kinect* von der *Microsoft Corporation* vertrieben werden bzw. vertrieben wurden. Insbesondere sind mindestens ein Laserentfernungsmesser und/oder mindestens ein Lasertiefensensor vorgesehen.

Umfasst die Sensoreinrichtung mehrere Sensoren, so kann gleichzeitig eine Vielzahl von Punkten für die Geometrieinformation bestimmt werden. Zusätzlich oder alternativ umfasst die Behandlungsvorrichtung in einer weiteren Ausgestaltung mindestens eine Bewegungseinrichtung zur Bewegung der Sensoreinrichtung und/oder der Anregungsquelle. Über eine bewegliche Sensoreinrichtung kann insbesondere die Position und Ausrichtung der Sensoren zeitlich variiert werden, so dass zusätzliche Punkte für die Geometrieinformation bestimmt werden können. Verschiedene Abschnitte der Oberfläche der Textilie können somit vermessen werden, so kann die Textilie beispielsweise von verschiedenen Perspektiven betrachtet bzw. über die Oberfläche der Textilie gescannt werden. Über eine Bewegung der Anregungsquelle können ebenfalls verschiedene Abschnitte der Oberfläche mit der Anregung beaufschlagt werden. Ebenso kann eine Bewegungseinrichtung zur Bewegung von optischen Elementen, beispielsweise für ein reflektierendes Element, vorgesehen sein.

In einer weiteren Ausgestaltung der Behandlungsvorrichtung weist die Behandlungsvorrichtung eine Beladeöffnung für Textilien auf und die Sensoreinrichtung und/oder Anregungsquelle sind an der Beladeöffnung angeordnet. Haushaltswaschmaschinen oder Haushaltstrockner weisen meist eine Trommel als Behälter für die zu behandelten Textilien auf, wobei die Trommel über eine Beladeöffnung zum Beladen oder Entladen zugänglich ist. Die Sensoreinrichtung kann sich an einer solchen Beladeöffnung insbesondere im Bereich des Rands der Beladeöffnung oder an einer Tür zum Verschließen der Beladeöffnung angeordnet sein. Ebenso kann die Sensoreinrichtung an einem Behälter für die zu behandelten Textilien, beispielsweise einer Trommel angeordnet sein. Damit kann die Ermittlung der Geometrieinformation insbesondere erfolgen, wenn der Benutzer die Behandlungsvorrichtung belädt oder entlädt. Beispielsweise wird die Sensoreinrichtung mit dem Beginn der Beladung aktiviert und stellt eine Geometrieinformation für alle in die Behandlungsvorrichtung eingebrachten Textilien bereit. Mit dem Abschluss des Beladens kann die Geometrieinformation charakteristisch für die räumliche Ausdehnung aller zu behandelnden Textilien in der Behandlungsvorrichtung sein. Ein Verfahren gemäß dem ersten Aspekt kann durchgeführt werden, um dem Benutzer eine Empfehlung über optimale Behandlungsparameter zu geben.

Beispielsweise wird eine Vorrichtung beschrieben, welche dazu eingerichtet ist oder entsprechende Mittel umfasst, ein Verfahren gemäß dem ersten Aspekt durchzuführen und/oder zu steuern.

Die Vorrichtung umfasst insbesondere ein mobiles Gerät oder ist als mobiles Gerät ausgestaltet. Das mobile Gerät ist beispielsweise ein Smartphone, Laptop, Tablet, Wearable oder Kamera und kann mit mindestens einer weiteren Vorrichtung kommunizieren, beispielsweise einer Behandlungsvorrichtung und/oder einer Sensoreinrichtung. Gemäß einer Ausgestaltung umfasst die Vorrichtung eine Kommunikationsschnittstelle. Beispielsweise ist die Kommunikationsschnittstelle für eine drahtgebundene oder drahtlose Kommunikation eingerichtet. Beispielsweise ist die Kommunikationsschnittstelle eine Netzwerkschnittstelle. Die Kommunikationsschnittstelle ist bevorzugt dazu eingerichtet mit einem Kommunikationssystem zu kommunizieren. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet. Ein Kommunikationssystem kann die Kommunikation mit einem externen Computer umfassen, beispielsweise über eine Internetverbindung.

Das mobile Gerät kann insbesondere für das Ermitteln des mindestens einen Behandlungsparameters ausgestaltet sein und beispielsweise Größen wie Oberfläche und Volumen der Textilie ermitteln. Ebenso kann die Ermittlung des mindestens einen Behandlungsparameters von einer weiteren Vorrichtung vorgenommen werden, welche insbesondere über ein Kommunikationssystem mit der Vorrichtung, welche eine Geometrieinformation bereitstellt, in Verbindung steht. Hierfür kann ein Server vorgesehen sein, welcher die Auswertung ausführt oder weitere Vorrichtungen veranlasst, die Auswertung durchzuführen. Ein solcher Server ist beispielsweise ein Datenbankserver. Beispiele eines Datenbankservers umfassen Microsoft SQL Server, Oracle Server und MySQL Server. Die Server können beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastrukturgemäß der Definition des "National Institute for Standards and Technology" (NIST) für den englischen Begriff "Cloud Computing" verstanden. Ein Beispiel einer Computer Cloud ist eine Microsoft Windows Azure Platform. Eine Computer Cloud kann insofern insbesondere als ein netzseitiger Speicher angesehen werden, welche Informationen (etwa eine Geometrieinformation oder einen Behandlungsparameter speichern und bereitstellen kann. Insbesondere kann die Computer Cloud diese Information dann gewissen Diensten, Benutzern sowie anderen Vorrichtungen bereitstellen.

Insbesondere kann eine Vorrichtung über zur Verfügung stehende Kommunikationskanäle und eine vorzugsweise gesicherte Verbindung zur Cloud vorteilhafterweise auch über die notwendigen Schnittstellen und Voraussetzungen zum Erhalt und zur Verarbeitung von Kontroll- und Steuerbefehlen aus der Cloud verfügen, sodass insbesondere eine Steuerung einer Behandlungsvorrichtung über einen netzseitig laufenden Dienst übernommen werden kann. Ferner können auch Steuerparameter über einen netzseitig laufenden Dienst verändert werden, um eine Operation zu starten oder auch eine laufende oder geplante Operation abzubrechen.

Insbesondere ist die Vorrichtung für ein Zusammenwirken mit einer Behandlungsvorrichtung eingerichtet oder die Vorrichtung umfasst eine Behandlungsvorrichtung.

Beispielsweise wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem dritten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Beispielsweise wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm kann in oder auf einem computerlesbaren Speichermedium gespeichert sein, welches eines oder mehrere Programme enthält.

Beispielsweise wird auch ein computerlesbares Speichermedium beschrieben, welches ein Computerprogramm enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Beispielsweise wird auch ein System beschrieben, umfassend mehrere Vorrichtungen, insbesondere ein mobiles Gerät und eine Behandlungsvorrichtung, welche zusammen ein Verfahren gemäß dem ersten Aspekt durchführen.

Ein beispielhaftes System gemäß dem dritten Aspekt umfasst eine beispielhafte Reinigungsvorrichtung und zusätzlich eine weitere Vorrichtung, beispielsweise ein mobiles Gerät oder einen Server zur Durchführung eines beispielhaften Verfahrens gemäß dem ersten Aspekt. Insbesondere kann das System auch weiter mindestens eine Textilie bzw. einen Satz von Textilien umfassen.

### Kurze Beschreibung der Figuren

In der Zeichnung zeigt
- Fig. 1: ein Ablaufdiagramm eines Ausführungsbeispiel eines Verfahrens;
- Fig. 2: ein Ablaufdiagramm eines weiteren Ausführungsbeispiels eines Verfahrens;
- Fig. 3: eine schematische Darstellung eines Ausführungsbeispiels einer Behandlungsvorrichtung;
- Fig. 4: eine schematische Darstellung eines Ausführungsbeispiels einer Sensoreinrichtung;
- Fig. 5a,b: schematische Darstellungen eines Ausführungsbeispiels einer Geometrieinformation;
- Fig. 6a - c: schematische Darstellungen weiterer Ausführungsbeispiele einer Sensoreinrichtung;
- Fig. 7: eine schematische Darstellung eines Ausführungsbeispiels einer Vorrichtung;
- Fig. 8: eine schematische Darstellung eines weiteren Ausführungsbeispiels einer Vorrichtung; und
- Fig. 9: unterschiedliche Ausführungsbeispiele eines Speichermediums.

### Detaillierte Beschreibung einiger beispielhafter Ausführungsformen der Erfindung

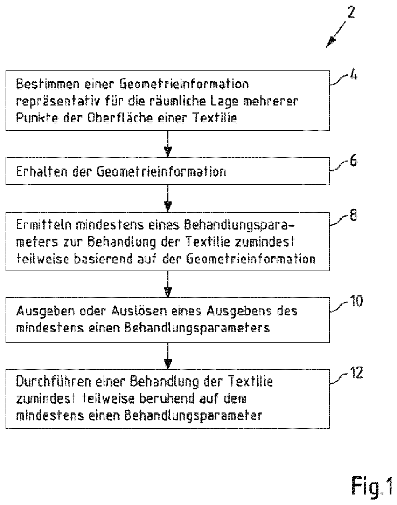

Fig.1 zeigt ein Ablaufdiagramm 2 eines Ausführungsbeispiels eines Verfahrens gemäß dem ersten Aspekt, welches durch eine Vorrichtung durchgeführt wird, beispielsweise durch eine der Vorrichtungen aus den nachfolgenden Figuren oder im Zusammenwirken mit einer der Vorrichtungen aus den nachfolgenden Figuren.

In der Aktion 4 wird eine Geometrieinformation repräsentativ für die räumliche Lage mehrerer Punkte der Oberfläche einer Textilie bestimmt. Die Geometrieinformation kann insbesondere eine Punktewolke repräsentativ für die räumliche Lage mehrerer Punkte der Oberfläche einer Textilie umfassen und charakteristisch für die räumliche Ausdehnung bzw. Gestalt der Textilie sein. Das Bestimmen der Geometrieinformation kann insbesondere das Beaufschlagen der Oberfläche der Textilie mit einer Anregung, beispielsweise mit einem Laserstrahl und die Verwendung eines Laserentfernungsmessers oder Lasertiefenmessers umfassen. Auch kann beispielsweise eine Stereokamera eingesetzt werden.

In Aktion 6 wird die Geometrieinformation repräsentativ für die räumliche Lage mehrerer Punkte der Oberfläche der Textilie erhalten. Beispielsweise wird Aktion 4 von einer Vorrichtung mit einer Sensoreinrichtung durchgeführt und die Geometrieinformation von einer weiteren Vorrichtung in Aktion 6 erhalten.

In Aktion 10 wird mindestens ein Behandlungsparameter zur Behandlung der Textilie zumindest teilweise basierend auf der Geometrieinformation ermittelt. Die Ermittlung umfasst beispielsweise eine Modellierung bzw. Interpolation der räumlichen Lage der Punkte zur Modellierung der Oberfläche, beispielsweise über Polygone oder Splines. Die Ermittlung kann beispielsweise die Bestimmung der Fläche der Oberfläche, des aufgespannten Volumens und von Querschnitten umfassen.

Über den mindestens einen Behandlungsparameter kann eine Empfehlung einer optimalen Behandlung der Textilie gegeben werden, da die beispielsweise die Behandlungsparameter von dem Volumen und/oder Oberfläche der zu behandelnden Textilie abhängen. Die Ermittlung des mindestens einen Behandlungsparameters kann beispielsweise anhand von mathematischen Funktionen und/oder einen Vergleich mit Vergleichswerten vorgenommen werden. Der mindestens eine Behandlungsparameter umfasst insbesondere eine Reinigungsmittelmenge bzw. Waschmittelmenge für eine Reinigungsbehandlung.

Der mindestens eine Behandlungsparameter wird in Aktion 10 ausgegeben bzw. dessen Ausgabe ausgelöst und beispielsweise dem Benutzer auf einer Anzeige zur Verfügung gestellt. Ebenso kann der mindestens eine Behandlungsparameter an eine Behandlungsvorrichtung ausgegeben werden.

Mit Aktion 12 wird eine Behandlung der Textilie durchgeführt, wobei die Behandlung zumindest teilweise auf dem mindestens einen Behandlungsparameter beruht, welcher in Aktion 8 ermittelt wird. Insbesondere wird eine Reinigungsbehandlung der Textilie durchgeführt, beispielsweise mit einer Reinigungsmittelmenge, welche anhand der Geometrieinformation ermittelt wurde.

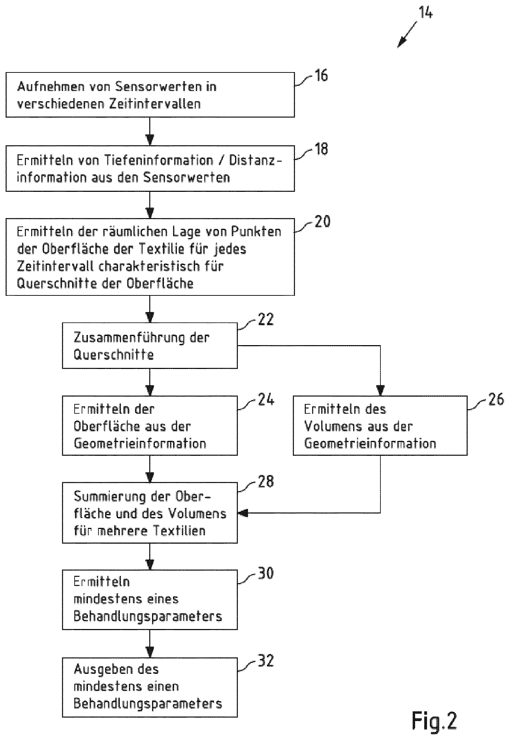

Fig. 2 zeigt ein Ablaufdiagramm 14 eines weiteren Ausführungsbeispiels eines Verfahrens gemäß dem ersten Aspekt, welches durch eine oder mehrere Vorrichtungen durchgeführt wird.

In Aktion 16 werden von einer Sensoreinrichtung Sensorwerte aufgenommen. In diesem Ausführungsbeispiel werden in verschiedenen Zeitintervallen Sensorwerte an einer bewegten Textilie oder über eine bewegte Sensoreinrichtung aufgenommen, so dass für verschiedene Zeitintervalle Sensorwerte repräsentativ für verschiedene Querschnitte der Oberfläche der Textilie aufgenommen werden. Beispielsweise wird eine auf einer Laufzeitmessung beruhende Sensoreinrichtung verwendet und die Sensorwerte sind repräsentativ für die Laufzeit eines Signals. Ebenso kann eine auf Triangulation beruhende Sensoreinrichtung verwendet werden und die Sensorwerte sind beispielsweise repräsentativ für einen Messwinkel.

In Aktion 18 wird aus den Sensorwerten eine Tiefeninformation bzw. Distanzinformation ermittelt, beispielsweise auf Grundlage der Laufzeit oder des Messwinkels im Zusammenhang mit der Geometrie der Sensoreinrichtung. Über die Tiefeninformation bzw. Distanzinformation und die Anordnung der Sensoreinrichtung kann in Aktion 20 eine Information repräsentativ für die räumliche Lage von Punkten der Oberfläche der Textilie ermittelt werden. Für jedes Zeitintervall können somit Punkte eines Querschnitts der Oberfläche ermittelt werden.

Die Querschnitte werden in Aktion 22 zusammengeführt, insbesondere unter Berücksichtigung der jeweiligen Messzeiten. Damit wird eine Geometrieinformation erstellt.

Aus dieser Geometrieinformation kann die Fläche der Oberfläche (Aktion 24) und/oder das aufgespannte Volumen (Aktion 26) ermittelt werden, beispielsweise über eine Modellierung bzw. Interpolation der räumlichen Lage der Punkte der Oberfläche.

Die Aktionen 16 - 26 können für eine Vielzahl von Textilien, welche gemeinsam behandelt werden sollen, durchgeführt werden. In Aktion 26 wird die Geometrieinformation der verschiedenen Textilien zusammengeführt, insbesondere über eine Summierung der ermittelten Oberflächen und der ermittelten Volumina.

In Aktion 30 wird schließlich aus der zusammengeführten Geometrieinformation mindestens ein Behandlungsparameter für die Textilien ermittelt und in Aktion 32 ausgegeben.

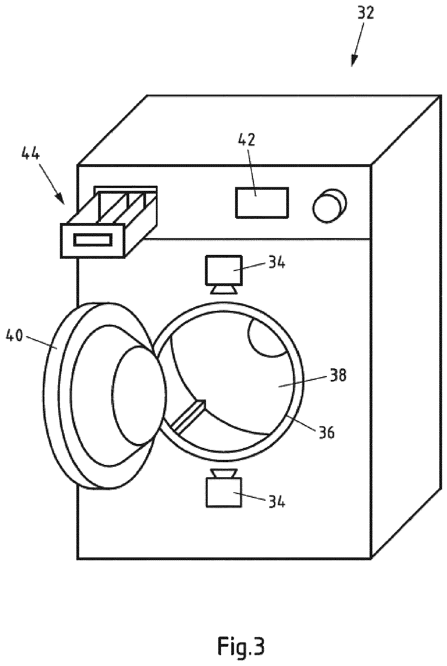

Fig. 3 zeigt ein Ausführungsbeispiel einer Behandlungsvorrichtung 32 zur Behandlung von Textilien gemäß dem zweiten Aspekt in einer perspektivischen schematischen Darstellung. Die Behandlungsvorrichtung 32 ist als Haushaltswaschmaschine zur Reinigung von Textilien ausgestaltet. Die Behandlungsvorrichtung 32 weist eine Sensoreinrichtung 34 zum Bestimmen einer Geometrieinformation repräsentativ für die räumliche Lage mehrerer Punkte einer Oberfläche einer Textilie auf.

Die Behandlungsvorrichtung 32 weist eine Beladeöffnung 36 für Textilien auf, wobei die Sensoreinrichtung 34 an der Beladeöffnung 36 angeordnet ist. Eine Trommel 38 als Behälter für die zu behandelten Textilien und eine Tür 40 zum Verschließen der Beladeöffnung 36 sind vorgesehen, wobei die Sensoreinrichtung 34 auch prinzipiell an Trommel 38 und/oder Tür 40 angeordnet sein kann. Die Ermittlung der Geometrieinformation kann über die Sensoreinrichtung 34 an der Beladeöffnung 36 erfolgen, wenn der Benutzer die Behandlungsvorrichtung 32 belädt.

Über die Sensoreinrichtung 34 können Sensorwerte aufgenommen werden, welche zur Ermittlung einer Geometrieinformation verwendet werden können und beispielsweise über ein Verfahren gemäß dem ersten Aspekt zu einer Ermittlung von optimalen Behandlungsparametern genutzt werden, beispielsweise zur Ermittlung einer optimalen Reinigungsmittelmenge. Das Verfahren kann von der Behandlungsvorrichtung 32 selbst oder von einer weiteren Vorrichtung (nicht in Fig. 3 gezeigt), welche in Kommunikation mit der Behandlungsvorrichtung 32 steht, durchgeführt werden. Die Behandlungsparameter können beispielsweise auf einer Anzeige 42 dem Benutzer zur Verfügung gestellt werden. Weiter kann eine Dosierungseinrichtung 44 vorgesehen sein, welche der Dosierung der Reinigungsmittelmenge dient und beispielsweise automatisch die ermittelte, optimale Reinigungsmittelmenge für eine Behandlung zur Verfügung stellt.

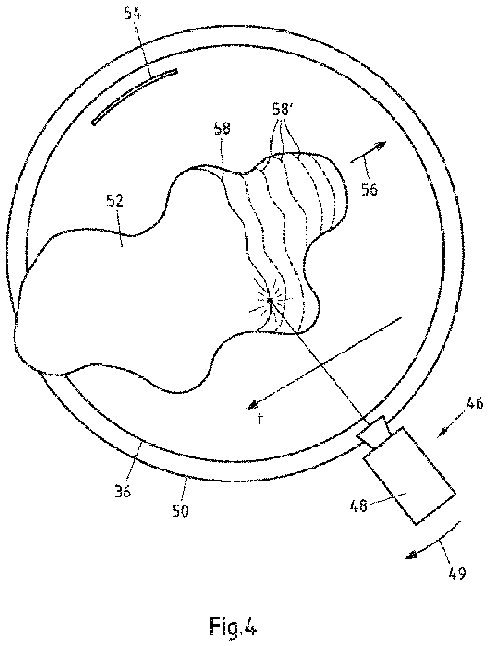

In Fig. 4 ist schematisch ein Ausführungsbeispiel einer Sensoreinrichtung 46 dargestellt. In der Darstellung ist die Sensoreinrichtung 46 analog zu Fig. 3 an der Beladeöffnung 36 einer Behandlungsvorrichtung angeordnet, jedoch kann die Sensoreinrichtung 46 auch an anderen Stellen einer Behandlungsvorrichtung oder auch an einer weiteren Vorrichtung angeordnet sein.

Die Sensoreinrichtung 46 weist einen Entfernungsmesser in Form eines Laserentfernungsmessers 48 auf, dessen Funktionsweise beispielsweise auf einer Laufzeitmessung oder einer Triangulation beruht. Weiter ist zur Bewegung der Sensoreinrichtung 46, wobei die Bewegung durch den Pfeil 49 angedeutet ist, als Bewegungseinrichtung eine Schiene 50 vorgesehen. In dem Ausführungsbeispiel verläuft die Schiene 50 entlang des Umfangs der Beladeöffnung 36. Folglich können Entfernungen zwischen der Sensoreinrichtung 46 und einem Objekt wie der Textilie 52 an verschiedenen Winkeln entlang des Umfangs der Beladeöffnung 36 aufgenommen werden. Der entsprechende Rotationswinkel wird in diesem Ausführungsbeispiel als *φ* bezeichnet. Ein reflektierendes Element 54 ist gegenüber dem Laserentfernungsmesser 48 vorgesehen und dient beispielsweise als Referenz für die Entfernungsmessung. Das reflektierende Element 54 ist beispielsweise auch über die Schiene 50 beweglich angeordnet.

Wird nun eine Textilie 52 in die Beladeöffnung 36 eingebracht, kann eine Geometrieinformation über die Sensoreinrichtung 46 bestimmt werden. In diesem Ausführungsbeispiel erfolgt die Bestimmung zeitabhängig, wobei die Textilie 52 bewegt wird, wie mit dem Pfeil 56 angedeutet. Die Bewegung der Textilie 52 beruht beispielsweise auf einem Beladen einer Behandlungsvorrichtung durch den Benutzer. Entlang eines Querschnitts 58 der Oberfläche der Textilie 52 werden über den Laserentfernungsmesser 48 Entfernungen bei verschiedenen Winkeln *φ* aufgenommen. Mit der Bewegung der Textilie 52 werden über die Zeit t somit insbesondere verschiedene Querschnitte 58' der Textilie 52 abgetastet, um eine Geometrieinformation repräsentativ zumindest für Abschnitte der Oberfläche der Textilie 52 zu bestimmen. Prinzipiell kann auch die Rotationsgeschwindigkeit der Sensoreinrichtung 46 entlang des Umfangs in der Größenordnung der Bewegungsgeschwindigkeit der Textilie 52 liegen und ein spiralförmiger Verlauf von Punkten entlang der Oberfläche der Textilie 52 aufgenommen werden.

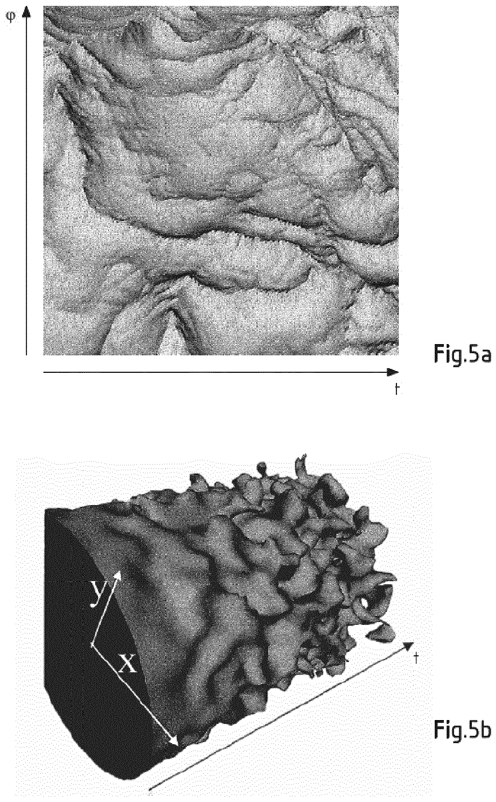

Wie in den Fig. 5a und 5b dargestellt, kann mit der beschriebenen Entfernungsmessung die räumliche Lage von Punkten der Oberfläche ermittelt werden. Die gemessene Distanz vom Laserentfernungsmesser 48 zur Oberfläche der Textilie 52 ist in Fig. 5a als Graustufe für verschiedene Winkel *φ* und Zeiten t dargestellt. Hieraus lässt sich die räumliche Lage der Oberfläche in kartesischen Koordinaten x, y beispielsweise für verschiedene Zeiten *t* ermitteln, wie in Fig. 5b dargestellt.

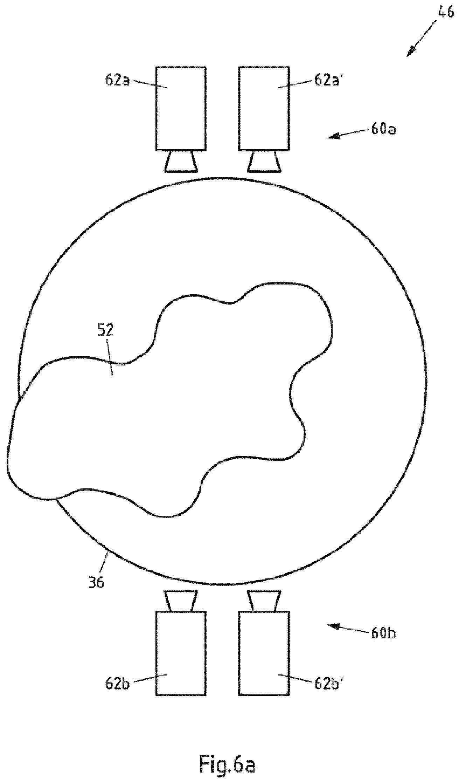

Die Fig. 6a - c zeigen weitere Ausgestaltungen einer Sensoreinrichtung 46. In Fig. 6a sind Stereokameras 60a, b an der Beladeöffnung 36 vorgesehen, insbesondere mindestens an zwei Seiten. Die Stereokameras 60a, b weisen jeweils mindestens zwei Kameras 62a, 62a'; 62b, 62b` auf, welche die Oberfläche der Textilie 52 aus verschiedenen Perspektiven aufnehmen. Durch einen Abgleich der Bilder der Kameras 62a, 62a'; 62b, 62b` kann eine Geometrieinformation ermittelt werden, welche die räumliche Lage von Punkten der Oberfläche der Textilie 52 repräsentiert.

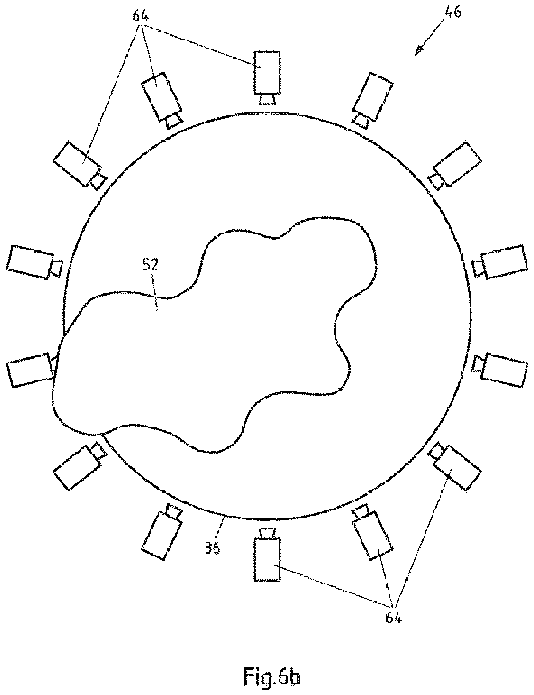

In Fig. 6b ist eine Sensoreinrichtung 46 gezeigt, wobei eine Vielzahl von Sensoren 64 als Sensorfeld entlang des Umfangs der Beladeöffnung 36 verteilt ist. Die Sensoren basieren beispielsweise auf Stereokameras, Zeilenkameras, Entfernungsmessern und/oder Tiefensensoren und können eine Vielzahl von Punkten der Oberfläche der Textilie 52 gleichzeitig erfassen. Beispielsweise sind die Sensoren 64 gleichmäßig mit im Wesentlichen gleichen Abständen entlang des Umfangs verteilt.

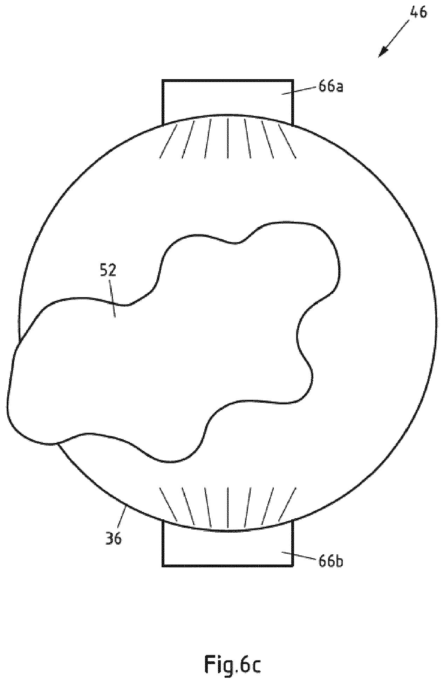

Fig. 6c zeigt eine Sensoreinrichtung mit scannenden Lasereinrichtungen bzw. Lasertiefensensoren 66a, 66b, welche an gegenüberliegenden Seiten der Beladeöffnung 36 angeordnet sind. Die Lasertiefensensoren 66a, 66b weisen beispielsweise eine bewegliche Laserquelle oder eine Laserquelle für eine räumlich strukturierte Anregung der Oberfläche der Textilie 52 auf. Damit können beispielsweise mehrere Punkte der Oberfläche gleichzeitig gemessen werden.

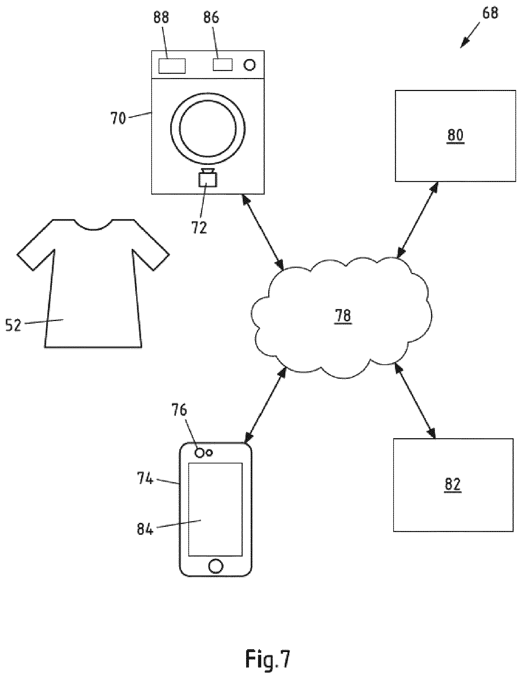

Fig. 7 zeigt ein Ausführungsbeispiel einer Vorrichtung 68 gemäß dem dritten Aspekt. Die Vorrichtung 68 ist dazu eingerichtet bzw. umfasst entsprechende Mittel, ein Verfahren gemäß dem ersten Aspekt durchzuführen und/oder zu steuern.

Insbesondere ermittelt die Vorrichtung 68 mindestens einen Behandlungsparameter auf Grundlage einer Geometrieinformation repräsentativ für die räumliche Lage mehrerer Punkte einer Oberfläche einer Textilie 52 und stellt somit eine Empfehlung über Behandlungsparameter bereit.

Zumindest ein Teil der Vorrichtung 68 kann dafür eingerichtet sein, die Geometrieinformation zu bestimmen. Beispielsweise ist eine Behandlungsvorrichtung 70 mit einer Sensoreinrichtung 72 vorgesehen, wobei die Geometrieinformation über die Sensoreinrichtung 72 bestimmt wird. Die Behandlungsvorrichtung 70 ist insbesondere eine Behandlungsvorrichtung gemäß dem zweiten Aspekt. Alternativ oder kumulativ kann ein mobiles Gerät, hier ein Smartphone 74 mit einer Sensoreinheit 76 zur Bestimmung der Geometrieinformation eingerichtet sein.

Die Geometrieinformation kann erhalten werden, beispielsweise von dem Smartphone 74 bzw. einem Kommunikationssystem 78, welches mit der Behandlungsvorrichtung 70 und dem Smartphone 74 in Verbindung steht.

Beispielsweise ist das Smartphone 74 dafür eingerichtet, den mindestens einen Behandlungsparameter zumindest teilweise basierend auf der Geometrieinformation zu ermitteln. Alternativ oder kumulativ kann auch eine Auswerteeinrichtung 80 vorgesehen sein, welche zumindest einen Teil der Ermittlung des mindestens einen Behandlungsparameters ausführen kann. Die Ermittlung kann beispielsweise auch einen Vergleich mit Vergleichswerten umfassen, welche insbesondere auf einer Datenbank 82 hinterlegt sind.

Der mindestens eine Behandlungsparameter kann ausgegeben werden, beispielsweise auf einer Anzeige 84 des Smartphones 74. Der mindestens eine Behandlungsparameter kann ebenso an die Behandlungsvorrichtung 70 ausgegeben werden und beispielsweise dort auf einer Anzeige 86 dem Benutzer zu Verfügung gestellt werden.

Der Benutzer kann anschließend selbst eine Behandlung gemäß dem ausgegeben Behandlungsparameter durchführen. Zudem kann auch eine automatisierte Ausführung einer solchen Behandlung vorgesehen sein. Beispielsweise verfügt die Behandlungsvorrichtung 70 über eine Dosiereinrichtung 88 zur Dosierung einer Reinigungsmittelmenge bei der Durchführung einer Reinigungsbehandlung. Die Dosiereinrichtung 88 kann eine gemäß den ermittelten Behandlungsparametern empfohlene Reinigungsmittelmenge bereitstellen und diese bei einer Reinigungsbehandlung zuführen.

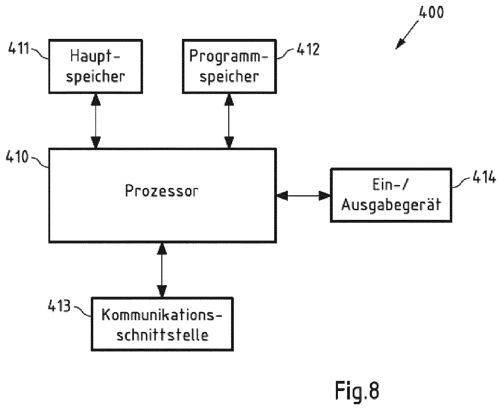

Fig. 8 zeigt ein Blockdiagramm eines Ausführungsbeispiels einer Vorrichtung 400, welche insbesondere ein beispielhaftes Verfahren gemäß dem ersten Aspekt ausführen kann. Die Vorrichtung 400 ist beispielsweise eine Vorrichtung gemäß dem dritten Aspekt. Ferner kann eine Vorrichtung gemäß dem zweiten Aspekt auch eine solche Vorrichtung gemäß Fig. 8 umfassen.

Die Vorrichtung 400 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 410 der Vorrichtung 400 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 410 führt Programmanweisungen aus, die in Programmspeicher 412 gespeichert sind, und speichert beispielsweise Zwischenergebnisse oder ähnliches in Arbeits- oder Hauptspeicher 411. Zum Beispiel ist Programmspeicher 412 ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Hauptspeicher 411 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 412 ist vorzugsweise ein lokaler mit der Vorrichtung 400 fest verbundener Datenträger. Mit der Vorrichtung 400 fest verbundene Datenträger sind beispielsweise Festplatten, die in die Vorrichtung 400 eingebaut sind. Alternativ kann der Datenträger beispielsweise auch ein mit der Vorrichtung 400 trennbar verbindbarer Datenträger sein wie ein Speicher-Stick, ein Wechseldatenträger, eine tragbare Festplatte, eine CD, eine DVD und/oder eine Diskette.

Programmspeicher 412 enthält beispielsweise das Betriebssystem von der Vorrichtung 400, das beim Starten der Vorrichtung 400 zumindest teilweise in Hauptspeicher 411 geladen und vom Prozessor 410 ausgeführt wird. Insbesondere wird beim Starten von Vorrichtung 400 zumindest ein Teil des Kerns des Betriebssystems in den Hauptspeicher 411 geladen und von Prozessor 410 ausgeführt. Das Betriebssystem von Vorrichtung 400 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 400 zur Datenverarbeitung. Es verwaltet beispielsweise Betriebsmittel wie Hauptspeicher 411 und Programmspeicher 412, Netzwerkschnittstelle 413, Ein- und Ausgabegerät 414, stellt unter anderem durch Programmierschnittstellen anderen Programmen grundlegende Funktionen zur Verfügung und steuert die Ausführung von Programmen.

Prozessor 410 steuert die Kommunikationsschnittstelle 413, welche beispielsweise eine Netzwerkschnittstelle sein kann und als Netzwerkkarte, Netzwerkmodul und/oder Modem ausgebildet sein kann. Die Kommunikationsschnittstelle 413 ist insbesondere dazu eingerichtet, eine Verbindung der Vorrichtung 400 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 413 kann beispielsweise Daten (über das Kommunikationssystem) empfangen und an Prozessor 410 weiterleiten und/oder Daten von Prozessor 410 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 410 zumindest ein Ein-/Ausgabegerät 414 steuern. Ein-/Ausgabegerät 414 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 414 kann beispielsweise Eingaben eines Benutzers aufnehmen und an Prozessor 410 weiterleiten und/oder Informationen für den Benutzer von Prozessor 410 empfangen und ausgeben.

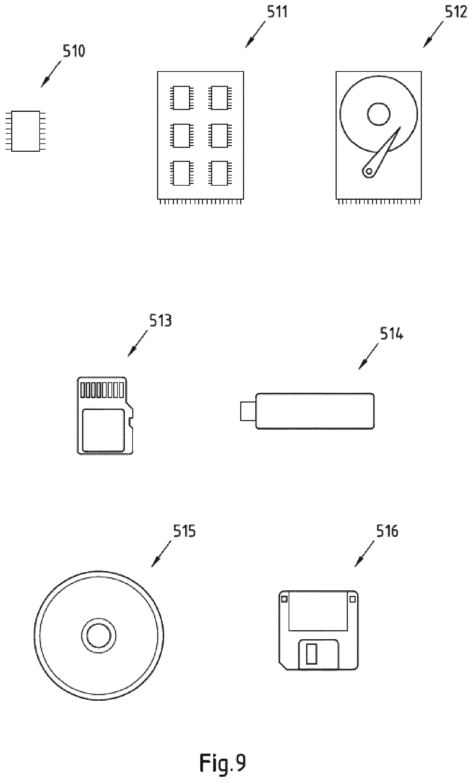

Fig. 9 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 410 der Fig. 8) sein, beispielsweise ein (nicht-flüchtiger oder flüchtiger) Programmspeicher des Prozessors oder ein Teil davon (wie Programmspeicher 412 in Fig. 8). Ausführungsbeispiele eines Speichermediums sind ein Flash-Speicher 510, eine SSD-Festplatte 511, eine magnetische Festplatte 512, eine Speicherkarte 513, ein Memory Stick 514 (z.B. ein USB-Stick), eine CD-ROM oder DVD 515 oder eine Diskette 516.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren durchgeführt von einer oder mehreren Vorrichtungen, umfassend:
- Erhalten oder Bestimmen einer Geometrieinformation repräsentativ für die räumliche Lage mehrerer Punkte einer Oberfläche einer Textilie (52);
- - Ermitteln anhand der räumlichen Lage der Punkte der Geometrieinformation mittels einer Interpolation zwischen den Punkten wenigstens eine Größe der Fläche der Oberfläche der Textilie, das aufgespannte Volumen der Oberfläche der Textilie, und/oder Querschnitte der Oberfläche der Textilie;
- Ermitteln mindestens eines Behandlungsparameters zur Behandlung der Textilie (52) zumindest teilweise basierend auf der Geometrieinformation, wobei der mindestens eine Behandlungsparameter mindestens eine Reinigungsmittelmenge angibt; und
- Ausgeben oder Auslösen eines Ausgebens des mindestens einen Behandlungsparameters,
wobei das Ermitteln des mindestens einen Behandlungsparameters auf der ermittelten Größe der Fläche der Oberfläche der Textilie (52) und/oder auf einem Ermitteln des Volumens, welches von der Oberfläche der Textilie (52) aufgespannt wird und/oder aus Querschnitten der Oberfläche der Textilie, beruht.

2. Verfahren nach einem der Ansprüche 1, das Verfahren weiterhin umfassend:
- Durchführen einer Behandlung der Textilie (52) zumindest teilweise beruhend auf dem mindestens einen Behandlungsparameter, insbesondere Durchführen einer Reinigungsbehandlung der Textilie (52).

3. Verfahren nach Anspruch 1, wobei das Bestimmen der Geometrieinformation das Beaufschlagen der Oberfläche der Textilie (52) mit einer Anregung umfasst, wobei die Anregung insbesondere einen Laserstrahl umfasst und wobei die Anregung insbesondere eindimensional oder zweidimensional räumlich strukturiert wird.

4. Verfahren nach Anspruch 1 oder 2, wobei das Bestimmen der Geometrieinformation eine Triangulation umfasst.

5. Verfahren nach einem der Ansprüche 1 bis 4, wobei das Bestimmen der Geometrieinformation zeitabhängig erfolgt und insbesondere in einer zeitlichen Abfolge die räumliche Lage von Punkten auf mehreren Querschnitten der Oberfläche der Textilie (52) aufgenommen wird.

6. Verfahren nach einem der Ansprüche 1 bis 3, durchgeführt von zumindest einer ersten Vorrichtung und einer zweiten Vorrichtung,
- wobei die Geometrieinformation repräsentativ für die räumliche Lage mehrerer Punkte einer Oberfläche einer Textilie (52) an der ersten Vorrichtung erhalten wird und an die zweite Vorrichtung gesendet wird;
- wobei die Geometrieinformation repräsentativ für die räumliche Lage mehrerer Punkte einer Oberfläche einer Textilie (52) an der zweiten Vorrichtung empfangen wird;
- wobei der mindestens eine Behandlungsparameter zur Behandlung der Textilie (52) zumindest teilweise basierend auf der Geometrieinformation durch die zweite Vorrichtung ermittelt an die erste Vorrichtung gesendet wird; und
- wobei der mindestens eine Behandlungsparameter an der ersten Vorrichtung empfangen wird.

## Claims

1. A method carried out by one or more devices, comprising:
- obtaining or determining geometric information representative of the spatial position of a plurality of points on a surface of a textile (52);
- - determining, on the basis of the spatial position of the points of the geometric information by means of an interpolation between the points, at least one size of the area of the surface of the textile, the spanned volume of the surface of the textile, and/or cross-sections of the surface of the textile;
- determining at least one treatment parameter for treating the textile (52) based at least partially on the geometric information, wherein the at least one treatment parameter indicates at least one amount of cleaning agent; and
- outputting or triggering an output of the at least one treatment parameter,
wherein the determination of the at least one treatment parameter is based on the determined size of the area of the surface of the textile (52) and/or on a determination of the volume spanned by the surface of the textile (52) and/or from cross-sections of the surface of the textile.

2. The method according to one of claims 1, the method further comprising:
- carrying out a treatment of the textile (52) based at least in part on the at least one treatment parameter, in particular carrying out a cleaning treatment of the textile (52).

3. The method according to claim 1, wherein the determination of the geometric information comprises the application of an excitation to the surface of the textile (52), wherein the excitation comprises in particular a laser beam and wherein the excitation is spatially structured in particular in a one-dimensional or two-dimensional manner.

4. The method according to claim 1 or 2, wherein the determination of the geometric information comprises triangulation.

5. The method according to one of claims 1 to 4, wherein the determination of the geometric information is time-dependent and, in particular, the spatial position of points on a plurality of cross-sections of the surface of the textile (52) is recorded in a temporal sequence.

6. The method according to one of claims 1 to 3, carried out by at least a first device and a second device,
- wherein the geometric information representative of the spatial position of a plurality of points on a surface of a textile (52) is obtained at the first device and sent to the second device;
- wherein the geometric information representative of the spatial position of a plurality of points on a surface of a textile (52) is received at the second device;
- wherein the at least one treatment parameter for treating the textile (52) is determined at least partially based on the geometric information by the second device and sent to the first device; and
- wherein the at least one treatment parameter is received at the first device.

## Revendications

1. Procédé mis en oeuvre par un ou plusieurs dispositifs, comprenant :
- l'obtention ou la détermination d'une information géométrique représentant la position spatiale de plusieurs points d'une surface d'un textile (52) ;
- la spécification, à l'aide de la position spatiale des points de l'information géométrique, au moyen d'une interpolation entre les points, au moins d'une taille de la superficie de la surface du textile, du volume défini par la surface du textile, et/ou de sections transversales de la surface du textile ;
- la spécification d'au moins un paramètre de traitement pour le traitement du textile (52) au moins en partie sur la base de l'informations géométrique, dans lequel l'au moins un paramètre de traitement indique au moins une quantité d'agent de nettoyage ; et
- la sortie ou le déclenchement d'une sortie de l'au moins un paramètre de traitement,
dans lequel la spécification de l'au moins un paramètre de traitement est basée sur la taille spécifiée de la superficie de la surface du textile (52) et/ou sur une spécification du volume qui est défini par la surface du textile (52) et/ou à partir de sections transversales de la surface du textile.

2. Procédé selon l'une des revendications 1, le procédé comprenant en outre :
- la mise en oeuvre d'un traitement du textile (52) au moins en partie sur la base de l'au moins un paramètre de traitement, en particulier la mise en oeuvre d'un traitement de nettoyage du textile (52).

3. Procédé selon la revendication 1, dans lequel la détermination de l'information géométrique comprend
la sollicitation de la surface du textile (52) par une excitation, dans lequel l'excitation comprend en particulier un faisceau laser et dans lequel l'excitation est structurée spatialement en particulier de manière unidimensionnelle ou bidimensionnelle.

4. Procédé selon la revendication 1 ou 2, dans lequel la détermination de l'information géométrique comprend une triangulation.

5. Procédé selon l'une des revendications 1 à 4, dans lequel la détermination de
l'information géométrique est effectuée en fonction du temps et, en particulier, la position spatiale de points sur plusieurs sections transversales de la surface du textile (52) est enregistrée dans une séquence temporelle.

6. Procédé selon l'une des revendications 1 à 3, mis en oeuvre par au moins un premier dispositif et un second dispositif,
- dans lequel l'information géométrique représentant la position spatiale de plusieurs points d'une surface d'un textile (52) est obtenue au niveau du premier dispositif et est envoyée au second dispositif ;
- dans lequel l'information géométrique représentant la position spatiale de plusieurs points d'une surface d'un textile (52) est reçue au niveau du second dispositif ;
- dans lequel l'au moins un paramètre de traitement pour le traitement du textile (52) est spécifié par le second dispositif au moins en partie sur la base de l'information géométrique et est envoyé au premier dispositif ; et
- dans lequel l'au moins un paramètre de traitement est reçu au niveau du premier dispositif.
